# EUROPÄISCHE PATENTSCHRIFT

(11) **EP 0 770 769 B1**
(45) Veröffentlichungstag und Bekanntmachung des Hinweises auf die Patenterteilung: **04.11.1998**
(21) Anmeldenummer: 96810648.4
(22) Anmeldetag: 30.09.1996
(51) Int. Cl.: F02B 37/02

(54) **Abgasleitungssystem für eine turboaufgeladene Viertakt-Brennkraftmaschine**
Exhaust conduit arrangement for a turbocharged four-stroke internal combustion engine
Système de conduits des gaz d'échappement pour un moteur à combustion interne à quatre temps suralimenté par un turbocompresseur

(30) Priorität: 25.10.1995 DE 19539572
(43) Veröffentlichungstag der Anmeldung: 02.05.1997
(73) Patentinhaber: ASEA BROWN BOVERI AG, 5400 Baden (CH)
(72) Erfinder: Baets, Jozef, 5400 Baden (CH); Codan, Ennio, Dr., 5212 Hausen (CH); Mathey, Christoph, 5442 Fislisbach (CH)
(74) Vertreter: Liebe, Rainer

(56) Entgegenhaltungen:
- DE-A- 3 940 992
- DE-C- 956 823

## Beschreibung

### Technisches Gebiet

Die Erfindung betrifft ein Abgasleitungssystem für eine turboaufgeladene Brennkraftmaschine, entsprechend dem Oberbegriff des Anspruchs 1.

### Stand der Technik

Abgasleitungssysteme für aufgeladene Brennkraftmaschinen dienen dazu, die Abgase von der Brennkraftmaschine zur Abgasturbine des Turboladers zu führen und dabei die verfügbare Abgasenergie möglichst gut auszunutzen. Bekannte Verfahren zur Aufladung von Brennkraftmaschinen sind die Gleichdruck- und die Stossaufladung sowie das Pulskonverter-Verfahren.

Bei der Gleichdruckaufladung werden die Abgase aller Zylinder des Motors in eine gemeinsame Abgasleitung eingeleitet und anschliessend der Abgasturbine zugeführt. Die verfügbare Abgasenergie wird beim Vollast-Betrieb des Motors, d.h. bei einem grossen Entspannungsdruckverhältnis der Abgasturbine, besonders gut ausgenutzt. Wird dagegen der Verbrennungsmotor mit verringerter Last oder Drehzahl, d.h. vorwiegend im Teillastbereich gefahren, ist die Turbinenleistung im stationären Betrieb sowie der Leistungsüberschuss zur Beschleunigung des Turbinenrotors sehr gering.

Bei der Stossaufladung sind entweder eine oder mehrere separate Abgasleitungen angeordnet, an denen jeweils zwei oder mehrere Zylinder angeschlossen werden. Es sind stets nur solche Zylinder miteinander verbunden, deren Auslass-öffnungszeiten sich nicht oder kaum überschneiden. Die im Zylinder vorhandene Druckenergie wird durch Druckwellen an die Abgasturbine übertragen, wobei nur geringe Druckverluste auftreten. Bei einer plötzlichen, höheren Lastaufnahme des Motors wird ein grosser Anteil der vorhandenen Druckenergie durch die Druckwellen praktisch verzögerungsfrei zur Abgasturbine transportiert, sobald im Motor eine höhere Kraftstoffmenge verbrannt wird. Ausserdem bleibt die Druckenergie im Vorauslass aufgrund der engen Abgasleitungen erhalten, weshalb das Energieangebot für die Abgasturbine besonders bei Teillast erhöht werden kann. Demzufolge wird die Stossaufladung von Verbrennungsmotoren immer dann bevorzugt, wenn entweder ein gutes Teillastverhalten oder ein dynamisches Verhalten bei Laständerungen erforderlich ist. Jedoch werden mit diesem Verfahren bei Vollast schlechtere Ergebnisse erzielt.

Aus der DE-A1 39 40 992 ist eine Lösung bekannt, die das Vollastverhalten bei einem Verfahren zur Stossaufladung verbessert. Dazu werden die zur Abgasturbine führenden Stossleitungen eines Viertakt-Verbrennungsmotors miteinander verbunden. In der Verbindungsleitung ist ein Absperrglied angeordnet, welches zwischen einer geöffneten Position für höhere Drehzahlen und einer geschlossenen Position für niedrige Drehzahlen verstellbar ist. Dadurch arbeitet das Abgasleitungssystem bei Teillast und geschlossenem Absperrglied im Stossbetrieb. Dagegen wird das Absperrglied bei Vollast geöffnet, so dass sich das Verhalten des Abgasleitungssystems der Gleichdruckaufladung annähert.

Nachteilig wirkt sich bei dieser Lösung jedoch aus, dass die Verbindungsleitung und damit auch das Absperrglied unmittelbar vor der Abgasturbine angeordnet sind. Alle in diesem Bereich hoher thermischer Beanspruchung befindlichen Bauteile verschleissen stark. Deshalb ist die Standfestigkeit insbesondere von beweglichen Bauteilen relativ gering, so dass das Absperrglied häufig ausgewechselt werden muss. Erfolgt der Austausch nicht rechtzeitig, kann das Abgasleitungssystem nicht mehr optimal an den Betriebszustand der Brennkraftmaschine angepasst werden. Daher wird die Aufladung verringert und die Brennkraftmaschine erreicht die geforderte Leistung nicht. Aufgrund der räumlichen Nähe des Absperrgliedes und der Abgasturbine besteht ausserdem die Gefahr, dass sich Teile des Absperrgliedes lösen, in den Abgasturbolader gelangen und die Abgasturbine zerstören.

Bei Verwendung eines Pulskonverters werden zwei oder mehrere Abgasleitungen vor der Abgasturbine ejektorartig zusammengeführt. Aufgrund der dabei erfolgenden, düsenartige Verengung der Abgasleitungen wird die Strömung beschleunigt und die Übertragung der jeweiligen Druckwellen in die benachbarte Leitung verhindert. Deshalb können auch Zylinder mit sich überschneidenden Auslass-Öffnungszeiten miteinander verbunden werden, ohne sich gegenseitig negativ zu beeinflussen. Durch den Einsatz eines Pulskonverters kann somit die Stossaufladung auch bei Vollast der Brennkraftmaschine effektiv eingesetzt werden, jedoch nähert sich das Teillastverhalten dem der Gleichdruckaufladung.

Mit der DE-C2-32 00 521 ist eine Lösung bekannt, bei der eine Umschaltung von der Stossaufladung zum Pulskonverter-Verfahren möglich ist. Dazu konvergieren die beiden zuvor parallel verlaufenden Abgasleitungen bis hin zu einem gemeinsamen Leitungsteil. In diesem Leitungsteil ist eine Zwischenwand drehbar angeordnet. Wenn die Zwischenwand geschlossen ist, wird die Stossaufladung realisiert. Bei geöffneter Zwischenwand erfolgt die Aufladung der Brennkraftmaschine im Pulskonverter-Verfahren.

Ein Nachteil dieser Lösung ist es, dass sich die beim Pulskonverter-Verfahren benötigte Verengung der Abgasleitungen auch beim Stossbetrieb im Hauptstrom der Abgase befindet. Dadurch wird die Hauptströmung gedrosselt, so dass ein Energieverlust eintritt. Ausserdem können die bereits weiter oben beschriebenen Verschleissprobleme auch an der Zwischenwand der beiden Abgasleitungen auftreten.

### Darstellung der Erfindung

Die Erfindung versucht, alle diese Nachteile zu vermeiden. Ihr liegt die Aufgabe zugrunde, für eine turboaufgeladene Brennkraftmaschine ein einfaches Abgasleitungssystem mit verbesserter Betriebssicherheit und erhöhter Standzeit zu schaffen, bei dem je nach Betriebszustand der Brennkraftmaschine sowohl die Vorteile der Stossaufladung als auch die des Pulskonverters genutzt werden.

Erfindungsgemäss wird dies dadurch erreicht, dass bei einer Vorrichtung gemäss dem Oberbegriff des Anspruchs 1, Verlängerungsstücke für die Stossleitungen ausgebildet und stromauf der am weitesten von der Abgasturbine entfernten Anschlussleitung angeordnet sind. Jede Stossleitung ist mit einem entsprechenden Verlängerungsstück verbunden. Zwischen den Verlängerungsstücken ist/sind die Verbindungsleitung/en angeordnet. Jede Verbindungsleitung weist eine, vorzugsweise als Blende ausgebildete, Querschnittverengung auf.

Beim Betrieb der Vorrichtung gelangt der Massenstrom der Abgase ohne Energieverlust aus den Zylindern der Brennkraftmaschine über die Stossleitungen direkt in die Abgasturbine. Da die Verbindungsleitung relativ weit entfernt von der Abgasturbine angeordnet ist, erfolgt über sie lediglich ein Druckausgleich zwischen den Stossleitungen. Wegen der Querschnittverengung in der Verbindungsleitung wird bei jedem Druckstoss der Zylinder nur ein kleiner Teil der Abgasmenge in die benachbarte Stossleitung eingeleitet, so dass die dort angeschlossenen Zylinder nicht gestört werden. Der Druckausgleich führt zu einem verringerten Druck in der gerade von einem oder mehreren Zylindern beaufschlagten Stossleitungen und zu einem erhöhten Druck in der bzw. den anderen Stossleitungen. Damit werden die Druckschwankungen in den Stossleitungen verringert, was zu einem verbesserten Turbinenwirkungsgrad führt. Auf diese Weise können auch mit der Stossaufladung gute Ergebnisse bei Vollast erreicht werden. Weil keine beweglichen Bauteile Verwendung finden wird die Konstruktion des Abgasleitungssystems einfacher und seine Standzeit erhöht sich.

Besonders vorteilhaft ist es, wenn am Übergang von den Verlängerungsstücken zur jeweiligen Verbindungsleitung ein Querschnittsprung ausgebildet ist und jede Verbindungsleitung ein zusätzliches Volumen aufweist. Durch diese Kapazität kommt es zur Dämpfung und damit zu einer verlängerten Wirkung der Druckwellen, d.h. es dauert länger bis diese von einer Stossleitung in die andere gelangen. Auf diese Weise werden die Druckschwankungen weiter verringert und so das Verhalten bei Vollast verbessert.

Als günstig erweist es sich, ein zwischen einer geöffneten. Position für hohe und einer geschlossenen Position für niedrige Drehzahlen der Brennkraftmaschine verstellbares Absperrglied in der Querschnittverengung der Verbindungsleitung anzuordnen. Damit kann bei Teillast und geschlossenem Absperrglied eine reine Stossaufladung erreicht werden. Dagegen wird das Absperrglied bei Vollast geöffnet, so dass eine Pulskonverter-Aufladung entsteht. Dabei ist das Absperrglied stromauf der Anschlussleitungen der Brennkraftmaschine angeordnet. In diesem der Abgasturbine entgegengesetzten Bereich des Abgasleitungssystems herrscht eine deutlich geringere thermische Beanspruchung, als im Bereich zwischen der Einmündung der Anschlussleitungen und der Abgasturbine. Daher besitzt das Absperrglied eine wesentlich längere Standzeit. Selbst wenn es beschädigt wird, können seine Bestandteile die Abgasturbine nicht zerstören, da diese weit entfernt angeordnet ist. Ausserdem ist bereits durch die Querschnittverengung der Verbindungsleitung ein effektiver Betrieb der Brennkraftmaschine bei Vollast gewährleistet, so dass das Abgasleitungssystem auch bei defektem Absperrglied weiter betrieben werden könnte.

### Kurze Beschreibung der Zeichnung

In der Zeichnung sind mehrere Ausführungsbeispiele der Erfindung anhand eines Abgasleitungssystems mit zwei Stossleitungen und einer Abgasturbine mit zwei Gaseintritten dargestellt.

Es zeigen:
- Fig. 1: eine schematische Darstellung des Abgasleitungssystems;
- Fig. 2: eine vergrösserte Darstellung eines Ausschnittes von Fig. 1, im Bereich der Verbindungsleitung;
- Fig. 3: eine Darstellung entsprechend Fig. 2, in einer zweiten Ausführungsform;
- Fig. 4: eine Darstellung entsprechend Fig. 2, in einer dritten Ausführungsform;
- Fig. 5: eine Darstellung entsprechend Fig. 3, in einer vierten Ausführungsform.

Es sind nur die für das Verständnis der Erfindung wesentlichen Elemente gezeigt. Die Strömungsrichtung der Arbeitsmittel ist mit Pfeilen bezeichnet.

### Weg zur Ausführung der Erfindung

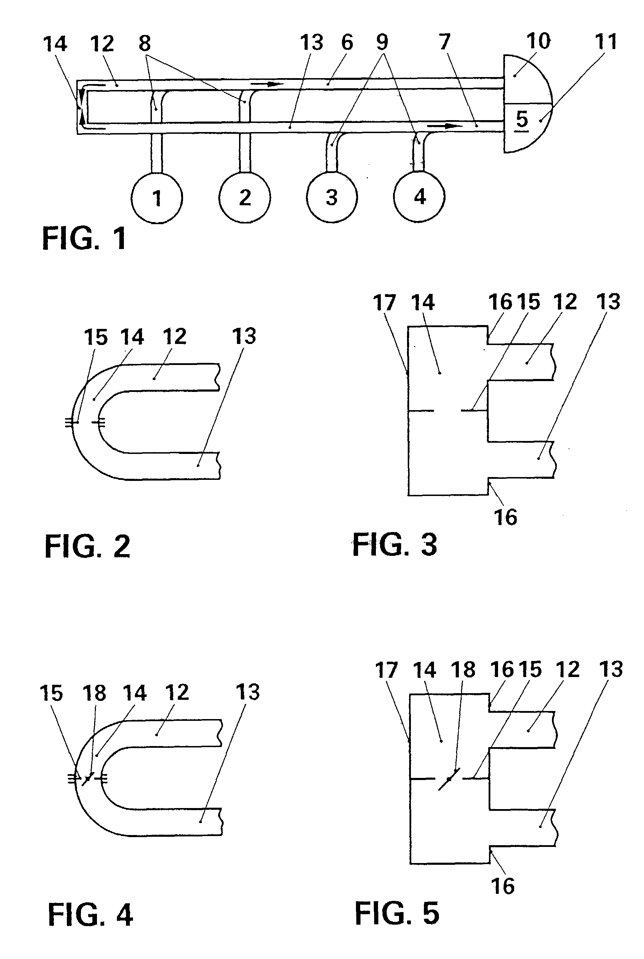

Die Fig. 1 zeigt vier Zylinder 1, 2, 3, 4 einer als Viertaktmotor ausgebildeten Brennkraftmaschine, welche über ein Abgasleitungssystem mit der Abgasturbine 5 eines Abgasturboladers zusammenwirken. Das Abgasleitungssystem besteht aus zwei Stossleitungen 6, 7, die über jeweils zwei Anschlussleitungen 8 bzw. 9 mit den entsprechenden Zylindern 1, 2 bzw. den Zylindern 3, 4 verbunden sind.

Stromabwärts greifen die Stossleitungen 6, 7 jeweils an einem separaten Gaseintritt 10, 11 der Abgasturbine 5 an. Für jede Stossleitung 6, 7 ist ein Verlängerungsstück 12, 13 ausgebildet und stromauf der am weitesten von der Abgasturbine 5 entfernten Anschlussleitung 8, 9 angeordnet. Die Stossleitung 6 ist mit dem Verlängerungsstück 12 und die Stossleitung 7 mit dem Verlängerungsstück 13 verbunden. Zwischen den beiden Verlängerungsstücken 12, 13 ist eine Verbindungsleitung 14 ausgebildet.

In einem ersten Ausführungsbeispiel (Fig. 2) ist in der Verbindungsleitung 14 eine als Blende ausgebildete Querschnittverengung 15 angeordnet. Werden nun beispielsweise aus den Zylindern 1 bzw. 2 Abgase in die erste Stossleitung 6 eingeführt, so wird deren grösster Teil an den Gaseintritt 10 der Abgasturbine 5 weitergeleitet. Der andere, geringere Teil der Abgase gelangt über das Verlängerungsstück 12, die Verbindungsleitung 14 und die darin angeordnete Blende 15 in das Verlängerungsstück 13 und schliesslich in die zweite Stossleitung 7. Dadurch wird der Druck in der ersten Stossleitung 6 verringert und in der zweiten Stossleitung 7 erhöht, d.h. es erfolgt ein gewisser Druckausgleich. Wird nun aus den anderen Zylindern 3 bzw. 4 Abgas in die zweite Stossleitung 7 eingeleitet, ist diese nicht leer, da noch Abgase aus der ersten Stossleitung 6 vorhanden sind. Es kommt somit zu einem relativ schnellen Druckaufbau, wobei ein Teil der Abgase über die Verbindungsleitung 14 in die erste Stossleitung 6 gelangt. Auf diese Weise wird die Druckdifferenz zwischen beiden Stossleitungen 6, 7 verringert, so dass geringere Druckschwankungen die Folge sind. Durch die gleichmässigere Beaufschlagung der Abgasturbine 5 steigt deren Wirkungsgrad, womit die Aufladung des Motors bei Vollast verbessert wird. Mit einer entsprechend ausgebildeten Blende 15 kann das Abgasleitungssystem teillast- oder vollastoptimiert ausgebildet werden.

In einem zweiten Ausführungsbeispiel (Fig. 3) ist am Übergang von den Verlängerungsstücken 12, 13 zur Verbindungsleitung 14 ein Querschnittsprung 16 ausgebildet und die Verbindungsleitung 14 weist ein zusätzliches Volumen 17 auf. Aufgrund dieser grösseren Kapazität werden die Druckwellen der Abgase gedämpft, d.h. sie wirken länger. Der über die Verbindungsleitung 14 aus der ersten Stossleitung 6 in die zweite Stossleitung 7 und umgekehrt gelangende Teil der Abgase benötigt dafür mehr Zeit. Dadurch werden die Druckschwankungen zwischen den beiden Stossleitungen 6, 7 weiter verringert und der Wirkungsgrad der Abgasturbine 5 wird nochmals erhöht.

Die Fig. 4 zeigt ein drittes Ausführungsbeispiel, bei dem innerhalb der Blende 15 ein bekanntes, als Klappe ausgebildetes Absperrglied 18 angeordnet ist. Die Klappe 18 kann zwischen einer geöffneten Position bei Vollast und einer geschlossenen Position bei Teillast umgestellt werden. Sie ist dazu mit einem nicht dargestellten Steuersystem verbunden, welches vom Ladedruck, von der Motorlast und/oder der Motordrehzahl abhängig ist. Aufgrund dieser Anordnung kann das Abgasleitungssystem je nach Betriebszustand des Motors vom Stossverfahren auf das Pulskonverter-Verfahren umgestellt werden.

In einem vierten Ausführungsbeispiel (Fig. 5) ist die Blende 15 wiederum mit einer Klappe 18 versehen und die Verbindungsleitung 14 weist ebenfalls das zusätzliche Volumen 17 auf. Damit werden alle bisher genannten Vorteile des Abgasleitungssystems miteinander verknüpft, so dass diese Lösung die grösste Variabilität in Bezug auf den Betriebszustand des Motors ermöglicht.

Natürlich können nicht nur Viertaktmotoren sondern insbesondere auch kleinere Zweitaktmotoren mit einem erfindungsgemässen Abgasleitungssystem verbunden werden. Ebenso ist die Erfindung nicht auf Motoren mit vier Zylindern oder auf Lösungen mit nur zwei Stossleitungen 6, 7 und lediglich einer Verbindungsleitung 14 beschränkt.

### Bezugszeichenliste

- 1: Zylinder
- 2: Zylinder
- 3: Zylinder
- 4: Zylinder
- 5: Abgasturbine
- 6: Stossleitung, erste
- 7: Stossleitung, zweite
- 8: Anschlussleitung, zu 6
- 9: Anschlussleitung, zu 7
- 10: Gaseintritt
- 11: Gaseintritt
- 12: Verlängerungsstück, von 6
- 13: Verlängerungsstück, von 7
- 14: Verbindungsleitung
- 15: Querschnittverengung, Blende
- 16: Querschnittsprung
- 17: Volumen
- 18: Absperrglied, Klappe

## Patentansprüche

1. Abgasleitungssystem für eine turboaufgeladene Brennkraftmaschine, bestehend aus
a) zumindest zwei separaten, von mehreren Zylindern (1 bis 4) der Brennkraftmaschine beaufschlagten und mit einer Abgasturbine (5) des Abgasturboladers verbundenen Stossleitungen (6, 7),
b) mehreren, die Zylinder (1 bis 4) mit den jeweiligen Stossleitungen (6, 7) verbindenden Anschlussleitungen (8, 9),
c) zumindest einer zwischen den Stossleitungen (6, 7) ausgebildeten Verbindungsleitung (14),
dadurch gekennzeichnet, dass
d) Verlängerungsstücke (12, 13) für die Stossleitungen (6, 7) ausgebildet und stromauf der am weitesten von der Abgasturbine (5) entfernten Anschlussleitung (8, 9) angeordnet sind,
e) jede Stossleitung (6, 7) mit einem entsprechenden Verlängerungsstück (12, 13) verbunden ist,
f) die Verbindungsleitung/en (14) zwischen den Verlängerungsstücken (12, 13) ausgebildet ist/sind,
g) jede Verbindungsleitung (14) eine Querschnittverengung (15) aufweist.

2. Abgasleitungssystem nach Anspruch 1, dadurch gekennzeichnet, dass am Übergang von den Verlängerungsstücken (12, 13) zur Verbindungsleitung (14) jeweils ein Querschnittsprung (16) ausgebildet ist und jede Verbindungsleitung ein zusätzliches Volumen (17) aufweist.

3. Abgasleitungssystem nach Anspruch 1 oder 2, dadurch gekennzeichnet, dass in der Querschnittverengung (15) der Verbindungsleitung (14) ein zwischen einer geöffneten Position für höhere Drehzahlen der Brennkraftmaschine und einer geschlossenen Position für niedrige Drehzahlen verstellbares Absperrglied (18) angeordnet ist.

4. Abgasleitungssystem nach einem der Ansprüche 1 bis 3, dadurch gekennzeichnet, dass als Querschnittverengung (15) eine Blende ausgebildet ist.

## Claims

1. Exhaust system for a turbocharged internal combustion engine, comprising
a) at least two separate shock pipes (6, 7) supplied by a plurality of cylinders (1 to 4) of the internal combustion engine and connected to an exhaust turbine (5) of the exhaust turbocharger,
b) a plurality of connection lines (8, 9), which connect the cylinders (1 to 4) to the respective shock pipes (6, 7),
c) at least one interconnection conduit (14) formed between the shock pipes (6, 7),
characterized in that
d) extension pieces (12, 13) are formed for the shock pipes (6, 7) and are arranged upstream of the connection line (8, 9) furthest away from the exhaust turbine (5),
e) each shock pipe (6, 7) is connected to a corresponding extension piece (12, 13),
f) the interconnection conduit/s (14) is/are formed between the extension pieces (12, 13),
g) each interconnection conduit (14) has a cross-sectional constriction (15).

2. Exhaust system according to Claim 1, characterized in that a respective jump in cross-section (16) is formed at the transition from the extension pieces (12, 13) to the interconnection conduit (14) and each interconnection conduit has an additional volume (17).

3. Exhaust system according to Claim 1 or 2, characterized in that a shut-off element (18) which can be adjusted between an open position for higher speeds of the internal combustion engine and a closed position for low speeds is arranged in the cross-sectional constriction (15) of the interconnection conduit (14).

4. Exhaust system according to any of Claims 1 to 3, characterized in that an orifice is formed as a cross-sectional constriction (15).

## Revendications

1. Système de conduits des gaz d'échappement pour un moteur à combustion interne suralimenté par un turbocompresseur, se composant de
a) au moins deux conduits d'échappement intermittent séparés (6, 7), alimentés par plusieurs cylindres (1 à 4) du moteur à combustion interne et raccordés à une turbine à gaz d'échappement (5) du turbocompresseur de suralimentation à gaz d'échappement,
b) plusieurs conduits de raccordement (8, 9) raccordant les cylindres (1 à 4) aux conduits d'échappement intermittent respectifs (6, 7),
c) au moins un conduit de jonction (14) formé entre les conduits d'échappement intermittent (6, 7),
caractérisé en ce que
d) on forme des pièces de prolongement (12, 13) pour les conduits d'échappement intermittent (6, 7) et on les dispose en amont du conduit de raccordement (8, 9) le plus éloigné de la turbine à gaz d'échappement (5),
e) chaque conduit d'échappement intermittent (6, 7) est raccordé à une pièce de prolongement (12, 13) correspondante,
f) le/les conduit/s de jonction (14) est/sont disposé/s entre les pièces de prolongement (12, 13),
g) chaque conduit de jonction (14) présente un rétrécissement de section (15).

2. Système de conduits des gaz d'échappement suivant la revendication 1, caractérisé en ce qu'une variation brusque de section (16) est formée à la transition entre les pièces de prolongement (12, 13) et le conduit de jonction (14) et en ce que chaque conduit de jonction présente un volume supplémentaire (17).

3. Système de conduits des gaz d'échappement suivant la revendication 1 ou 2, caractérisé en ce qu'un organe d'arrêt (18), réglable entre une position ouverte pour les vitesses de rotation plus élevées du moteur à combustion interne et une position fermée pour les faibles vitesses de rotation, est disposé dans le rétrécissement de section (15) du conduit de jonction (14).

4. Système de conduits des gaz d'échappement suivant l'une quelconque des revendications 1 à 3, caractérisé en ce que le rétrécissement de section (15) est constitué par un diaphragme.
